(19) Europäisches Patentamt
European Patent Office
Office européen des brevets

(11) **EP 3 748 882 A1**

(12) **EUROPEAN PATENT APPLICATION**
published in accordance with Art. 153(4) EPC

(43) Date of publication:
**09.12.2020 Bulletin 2020/50**

(51) Int Cl.:
**H04L 1/00** (2006.01)

(21) Application number: **19788140.2**

(22) Date of filing: **17.04.2019**

(86) International application number:
**PCT/CN2019/083008**

(87) International publication number:
**WO 2019/201269 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2018 CN 201810356380**

(71) Applicant: **HUAWEI TECHNOLOGIES CO., LTD.**
**Shenzhen, Guangdong 518129 (CN)**

(72) Inventors:
• **ZHANG, Zhaoyang**
**Hangzhou, Zhejiang 310027 (CN)**
• **WANG, Xiong**
**Hangzhou, Zhejiang 310027 (CN)**
• **QIN, Kangjian**
**Hangzhou, Zhejiang 310027 (CN)**
• **ZHU, Zhihuan**
**Hangzhou, Zhejiang 310027 (CN)**
• **WANG, Guijie**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **POLAR CODE ENCODING METHOD AND DEVICE**

(57) Embodiments of this application provides a Polar code encoding and decoding method and an apparatus. The Polar code decoding method includes: obtaining, by a receiving apparatus, to-be-decoded information and scrambled frozen bits; performing, by the receiving apparatus, polarization decoding on some pieces of information in the to-be-decoded information based on the scrambled frozen bits, to obtain intermediate decoding information, where the intermediate decoding information includes I information bit segments and CRC bit segments respectively corresponding to the I information bit segments, where I is a positive integer; and the to-be-decoded information includes J information bit segments and CRC bit segments respectively corresponding to the J information bit segments, where J is a positive integer, and I is less than J; performing, by the receiving apparatus, CRC check on the intermediate decoding information; and if the CRC check performed by the receiving apparatus on the intermediate decoding information fails, stopping performing polarization decoding on the to-be-decoded information. Decoding and CRC check are performed segment by segment, to reduce decoding calculation complexity and reduce a decoding time.

FIG. 5

## Description

This application claims priority to Chinese Patent Application No. 201810356380.0, filed with the Chinese Patent Office on April 19, 2018 and entitled "POLAR CODE ENCODING AND DECODING METHOD AND APPARATUS", which is incorporated herein by reference in its entirety.

## TECHNICAL FIELD

Embodiments of this application relate to the field of communications technologies, and in particular, to a Polar code encoding and decoding method and an apparatus.

## BACKGROUND

In a long term evolution (Long Term Evolution, LTE) communications system, before receiving or sending data, a terminal device needs to learn of downlink control information (Downlink control channel, DCI) configured by a base station for the terminal device, and the DCI is carried on a physical downlink control channel (Physical Downlink Control channel, PDCCH). Blind detection is an operation proposed in the 3rd generation partnership project (3rd Generation Partnership Project, 3GPP) LTE/LTE-Advanced standard, to enable the terminal device to obtain the DCI. The terminal device needs to search in a common search space (Common Search Space, CSS) and a user-specific search space (UE-specific search space, USS) based on a PDCCH location, a PDCCH format, and a DCI format. For each candidate PDCCH in such search space, the terminal device needs to attempt to perform channel decoding on the candidate PDCCH, and obtain the DCI through decoding.

Currently, an operation of the base station is as follows: The base station generates a cyclic redundancy check (Cyclic Redundancy Check, CRC) sequence based on the DCI of the terminal device, scrambles the CRC sequence by using a radio network temporary identifier (Radio network temporary identifier, RNTI) of the terminal device, to obtain a scrambled CRC sequence, and uses the DCI of the terminal device and the scrambled CRC sequence as information bits to perform Polar code encoding. An operation of the terminal device is as follows: The terminal device obtains the candidate PDCCH through blind detection, performs Polar code decoding on the candidate PDCCH, descrambles the scrambled CRC sequence by using the RNTI, and performs CRC check by using a descrambled CRC sequence. If the CRC check succeeds, the terminal device may determine that the candidate PDCCH includes the DCI required by the terminal device.

However, the CRC check can be performed only when the last bit of the candidate PDCCH is decoded. Consequently, a delay of Polar code is relatively high.

## SUMMARY

Embodiments of this application provide a Polar code encoding and decoding method and an apparatus, to reduce decoding calculation complexity and reduce a decoding time.

According to a first aspect, an embodiment of this application provides a Polar code decoding method. The method includes: obtaining, by a receiving apparatus, to-be-decoded information and scrambled frozen bits; performing, by the receiving apparatus, polarization decoding on some pieces of information in the to-be-decoded information based on the scrambled frozen bits, to obtain intermediate decoding information, where the intermediate decoding information includes I information bit segments and CRC bit segments respectively corresponding to the I information bit segments, and each of the CRC bit segments is concatenated at a tail of the information bit segment corresponding to the CRC bit segment, where I is a positive integer; and the to-be-decoded information includes J information bit segments and CRC bit segments respectively corresponding to the J information bit segments, where J is a positive integer, and I is less than J; performing, by the receiving apparatus, CRC check on the intermediate decoding information; and if the CRC check performed by the receiving apparatus on the intermediate decoding information fails, stopping performing polarization decoding on the to-be-decoded information.

According to the Polar code decoding method provided in the first aspect, an information bit segment and a CRC bit segment corresponding to the information bit segment may be gradually obtained in a decoding process. CRC check is performed on the I information bit segments and the CRC bit segments respectively corresponding to the I information bit segments. If the CRC check fails, it indicates that an error has occurred, and decoding may be stopped in advance and it is determined that the decoding fails. A decoding error does not need to be determined after polarization decoding is completed on all to-be-decoded information, and the decoding error may be determined in an intermediate decoding stage, thereby reducing the calculation complexity and reducing the decoding time.

Optionally, in a possible implementation of the first aspect, the scrambled frozen bits are scrambled by using a radio network temporary identifier RNTI of a terminal device.

According to the Polar code decoding method provided in the possible implementation, scrambling is performed by using the RNTI of the terminal device, to improve error correction performance of a codeword.

Optionally, in a possible implementation of the first aspect, the to-be-decoded information is candidate information determined through blind detection, and the method further includes: performing, by the receiving apparatus, the foregoing polarization decoding and CRC check steps on N pieces of candidate information on which polarization decoding is not performed and that are determined through blind detection, until a quantity of first candidate information is equal to N, or until a quantity of first candidate information is equal to a preset maximum quantity of decoding attempts, or until second candidate information is obtained; and outputting all information bit segments obtained after polarization decoding is completed on the second candidate information, where N is a positive integer; the first candidate information is candidate information on which the CRC check fails; and the second candidate information is candidate information on which polarization decoding is completed on all information of the candidate information and on which the CRC check succeeds.

According to the Polar code decoding method provided in the possible implementation, the decoding error does not need to be determined after polarization decoding is completed on each piece of candidate information, and whether the candidate information is decoded incorrectly may be determined in the intermediate decoding stage, thereby reducing calculation complexity of blind detection and reducing a blind detection time.

Optionally, in a possible implementation of the first aspect, the candidate information determined through blind detection is used to determine a PDCCH or a PBCH.

Optionally, in a possible implementation of the first aspect, the method further includes: if the CRC check performed by the receiving apparatus on the intermediate decoding information succeeds, returning to a step of continuing to perform polarization decoding, to obtain updated intermediate decoding information; performing CRC check on the updated intermediate decoding information, until the CRC check fails, then stopping performing polarization decoding, or until the CRC check succeeds, then completing polarization decoding on all information in the to-be-decoded information; and outputting all information bit segments obtained after polarization decoding is completed on the to-be-decoded information, where the updated intermediate decoding information includes 1+1 information bit segments and CRC bit segments respectively corresponding to the 1+1 information bit segments, and each of the CRC bit segments is concatenated at the tail of the information bit segment corresponding to the CRC bit segment.

Optionally, in a possible implementation of the first aspect, that the CRC check performed on the intermediate decoding information succeeds includes: that CRC check performed on each of the I information bit segments succeeds.

Optionally, in a possible implementation of the first aspect, that the CRC check performed on the information bit segment succeeds includes: obtaining L decoding paths by using an SCL algorithm, where L is a positive integer; and if CRC check performed on any one of the L decoding paths succeeds, determining that the CRC check performed on the information bit segment succeeds.

Optionally, in a possible implementation of the first aspect, the performing, by the receiving apparatus, CRC check on the intermediate decoding information includes: separately performing, by the receiving apparatus, CRC check on the I information bit segments in sequence based on an arrangement order of the I information bit segments.

Optionally, in a possible implementation of the first aspect, that the CRC check performed on the intermediate decoding information fails includes: that CRC check performed on any one of the I information bit segments fails.

Optionally, in a possible implementation of the first aspect, that the CRC check performed on the information bit segment fails includes: obtaining L decoding paths by using the SCL algorithm, where L is a positive integer; and if CRC check performed on each of the L decoding paths fails, determining that the CRC check performed on the information bit segment fails.

According to a second aspect, an embodiment of this application provides a Polar code encoding method. The method includes: obtaining, by a sending apparatus, a to-be-encoded information bit sequence; segmenting, by the sending apparatus, the to-be-encoded information bit sequence, to obtain J information bit segments, where J is an integer greater than 1; separately performing, by the sending apparatus, CRC check on the J information bit segments, to obtain J CRC bit segments; performing, by the sending apparatus, polarization encoding on J CRC-checked information bit segments and preset frozen bits, to obtain a polarization-encoded information bit sequence, where the J CRC-checked information bit segments include the J information bit segments and the J CRC bit segments, and each of the CRC bit segment is concatenated at a tail of the information bit segment corresponding to the CRC bit segment; and outputting, by the sending apparatus, the polarization-encoded information bit sequence.

Optionally, in a possible implementation of the second aspect, the preset frozen bits are scrambled by using an RNTI of a terminal device.

Optionally, in a possible implementation of the second aspect, that the preset frozen bits are scrambled by using an RNTI of a terminal device includes: cyclically scrambling, by the sending apparatus, the RNTI of the terminal device on the frozen bits.

Optionally, in a possible implementation of the second aspect, that the preset frozen bits are scrambled by using an RNTI of a terminal device includes: scrambling, by the sending apparatus, the RNTI of the terminal device on frozen bits corresponding to at least one of the J information bit segments.

Optionally, in a possible implementation of the second aspect, that the preset frozen bits are scrambled by using an RNTI of a terminal device includes: that frozen bits corresponding to each of the J information bit segments includes at least one frozen bit scrambled by using the RNTI of the terminal device.

Optionally, in a possible implementation of the second aspect, the to-be-encoded information bit sequence is information carried in DCI or a PBCH.

Optionally, in a possible implementation of the second aspect, the J information bit segments each include an equal quantity of information bits.

According to a third aspect, an embodiment of this application provides a receiving apparatus, including: an obtaining module, configured to obtain to-be-decoded information and scrambled frozen bits; a decoding module, configured to perform polarization decoding on some pieces of information in the to-be-decoded information based on the scrambled frozen bits, to obtain intermediate decoding information, where the intermediate decoding information includes I information bit segments and CRC bit segments respectively corresponding to the I information bit segments, and each of the CRC bit segments is concatenated at a tail of the information bit segment corresponding to the CRC bit segment, where I is a positive integer; and the to-be-decoded information includes J information bit segments and CRC bit segments respectively corresponding to the J information bit segments, where J is a positive integer, and I is less than J; a check module, configured to perform CRC check on the intermediate decoding information; and the decoding module, further configured to: if the CRC check performed on the intermediate decoding information fails, stop performing polarization decoding on the to-be-decoded information.

Optionally, in a possible implementation of the third aspect, the scrambled frozen bits are scrambled by using an RNTI of a terminal device.

Optionally, in a possible implementation of the third aspect, the to-be-decoded information is candidate information determined through blind detection, the decoding module is further configured to perform the foregoing polarization decoding step on N pieces of candidate information on which polarization decoding is not performed and that are determined through blind detection, and the check module is further configured to: perform the foregoing CRC check step, until a quantity of first candidate information is equal to N, or until a quantity of first candidate information is equal to a preset maximum quantity of decoding attempts, or until second candidate information is obtained; and output all information bit segments obtained after polarization decoding is completed on the second candidate information, where N is a positive integer; the first candidate information is candidate information on which the CRC check fails; and the second candidate information is candidate information on which polarization decoding is completed on all information of the candidate information and on which the CRC check succeeds.

Optionally, in a possible implementation of the third aspect, the candidate information determined through blind detection is used to determine a PDCCH or a PBCH.

Optionally, in a possible implementation of the third aspect, the decoding module is further configured to: if the CRC check performed on the intermediate decoding information succeeds, return to a step of continuing to perform polarization decoding, to obtain updated intermediate decoding information; and the check module is further configured to: perform CRC check on the updated intermediate decoding information, until the CRC check fails, then stop performing polarization decoding, or until the CRC check succeeds, then complete polarization decoding on all information in the to-be-decoded information; and output all information bit segments obtained after polarization decoding is completed on the to-be-decoded information, where the updated intermediate decoding information includes 1+1 information bit segments and CRC bit segments respectively corresponding to the 1+1 information bit segments, and each of the CRC bit segments is concatenated at the tail of the information bit segment corresponding to the CRC bit segment.

Optionally, in a possible implementation of the third aspect, the check module is specifically configured to determine that CRC check performed on each of the I information bit segments succeeds.

Optionally, in a possible implementation of the third aspect, the check module is specifically configured to: obtain L decoding paths by using an SCL algorithm, where L is a positive integer; and if CRC check performed on any one of the L decoding paths succeeds, determine that the CRC check performed on the information bit segment succeeds.

Optionally, in a possible implementation of the third aspect, the check module is specifically configured to: separately perform, by the receiving apparatus, CRC check on the I information bit segments in sequence based on an arrangement order of the I information bit segments.

Optionally, in a possible implementation of the third aspect, the check module is specifically configured to determine that CRC check performed on any one of the I information bit segments fails.

Optionally, in a possible implementation of the third aspect, the check module is specifically configured to: obtain L decoding paths by using the SCL algorithm, where L is a positive integer; and if CRC check performed on each of the L decoding paths fails, determine that the CRC check performed on the information bit segment fails.

According to a fourth aspect, an embodiment of this application provides a sending apparatus, including: an obtaining module, configured to obtain a to-be-encoded information bit sequence; a data segmentation module, configured to segment the to-be-encoded information bit sequence, to obtain J information bit segments, where J is an integer greater than 1; a check module, configured to separately perform CRC check on the J information bit segments, to obtain J CRC bit segments; and an encoding module, configured to: perform polarization encoding on J CRC-checked information bit segments and preset frozen bits, to obtain a polarization-encoded information bit sequence, and output the polarization-encoded information bit sequence, where the J CRC-checked information bit segments include the J information bit segments and the J CRC bit segments, and each of the CRC bit segments is concatenated at a tail of the information bit segment corresponding to the CRC bit segment.

Optionally, in a possible implementation of the fourth aspect, the preset frozen bits are scrambled by using an RNTI of a terminal device.

Optionally, in a possible implementation of the fourth aspect, the encoding module is specifically configured to: cyclically scramble the RNTI of the terminal device on the frozen bits.

Optionally, in a possible implementation of the fourth aspect, the encoding module is specifically configured to: scramble the RNTI of the terminal device on frozen bits corresponding to at least one of the J information bit segments.

Optionally, in a possible implementation of the fourth aspect, the encoding module is specifically configured to: indicate that frozen bits corresponding to each of the J information bit segments includes at least one frozen bit scrambled by using the RNTI of the terminal device.

Optionally, in a possible implementation of the fourth aspect, the to-be-encoded information bit sequence is information carried in DCI or a PBCH.

Optionally, in a possible implementation of the fourth aspect, the J information bit segments each include an equal quantity of information bits.

According to a fifth aspect, an embodiment of this application provides a receiving device, including a memory, a processor, and a computer program, where the computer program is stored in the memory, and the processor runs the computer program to perform the method according to the first aspect and various possible designs of the first aspect.

According to a sixth aspect, an embodiment of this application provides a sending device, including a memory, a processor, and a computer program, where the computer program is stored in the memory, and the processor runs the computer program to perform the method according to the second aspect and various possible designs of the second aspect.

According to a seventh aspect, an embodiment of this application provides a storage medium, where the storage medium stores a computer program, and the computer program is used to implement the method according to the first aspect and various possible designs of the first aspect, or implement the method according to the second aspect and various possible designs of the second aspect.

According to an eighth aspect, an embodiment of this application provides a computer program product, where the computer program product includes computer program code; and when the computer program code is run on a computer, the computer is enabled to perform the method according to the first aspect and various possible designs of the first aspect, or perform the method according to the second aspect and various possible designs of the second aspect.

According to a ninth aspect, an embodiment of this application provides a chip, including a memory and a processor, where the memory is configured to store a computer program, and the processor is configured to invoke the computer program from the memory and run the computer program, so that the chip performs the method according to the first aspect and various possible designs of the first aspect; or perform the method according to the second aspect and various possible designs of the second aspect.

Embodiments of this application provides a Polar code encoding and decoding method and an apparatus. On an encoding side, a to-be-encoded information bit sequence is segmented, and a CRC bit segment is generated based on each information bit segment. Segmental polarization encoding may be performed on each information bit segment and the CRC bit segment corresponding to the information bit segment, so that the receiving apparatus can perform polarization decoding on each information bit segment and the CRC bit segment corresponding to the information bit segment. On a decoding side, an information bit segment and a CRC bit segment corresponding to the information bit segment may be gradually obtained in a decoding process. CRC check is performed on I information bit segments and CRC bit segments respectively corresponding to the I information bit segments. If the CRC check fails, it indicates that an error has occurred, and decoding may be stopped in advance and it is determined that the decoding fails. Because a decoding error does not need to be determined after polarization decoding is completed on all to-be-decoded information, and the decoding error may be determined in an intermediate decoding stage, calculation complexity is reduced, and a decoding time is reduced.

## BRIEF DESCRIPTION OF DRAWINGS

FIG. 1 is a system architectural diagram of a wireless communications system to which an embodiment of this application is applicable;

FIG. 2 is a schematic diagram of a change of a code stream used by an existing network device to perform polarization encoding on DCI;

FIG. 3 is a flowchart of a Polar code encoding method according to an embodiment of this application;

FIG. 4 is a schematic diagram of a change of a codeword in a polarization encoding process according to an embodiment of this application;

FIG. 5 is a flowchart of a Polar code decoding method according to an embodiment of this application;

FIG. 6 is a schematic structural diagram of determining whether CRC check fails according to an embodiment of this application;

FIG. 7 is a schematic diagram of decoding performance according to an embodiment of this application;

FIG. 8 is a schematic diagram of decoding performance according to an embodiment of this application;

FIG. 9 is a schematic diagram of decoding performance according to an embodiment of this application;

FIG. 10 is a schematic structural diagram of a sending apparatus according to an embodiment of this application;

FIG. 11 is a schematic structural diagram of a receiving apparatus according to an embodiment of this application;

FIG. 12 is a schematic structural diagram of a sending device according to an embodiment of this application; and

FIG. 13 is a schematic structural diagram of a receiving device according to an embodiment of this application.

## DESCRIPTION OF EMBODIMENTS

A Polar code encoding and decoding method provided in the embodiments of this application may be applied to a wireless communications system. A type of the wireless communications system is not limited in the embodiments of this application. For example, the wireless communications system may be a global system for mobile communications (Global System for Mobile Communications, GSM), a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, an LTE communications system, a 5G mobile communications system, and a narrow band-internet of things (Narrow Band-Internet of Things, NB-IoT) system.

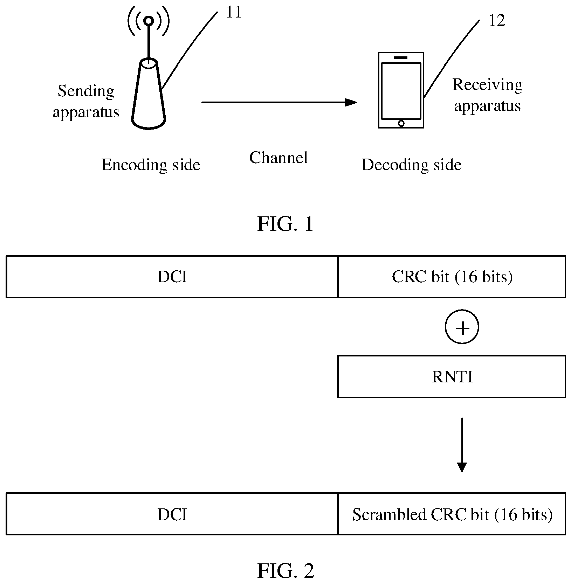

For example, FIG. 1 is a system architectural diagram of a wireless communications system to which an embodiment of this application is applicable. As shown in FIG. 1, the wireless communications system to which this embodiment of this application is applicable may include a sending apparatus 11 (also referred to as a sending device) and a receiving apparatus 12 (also referred to as a receiving device). The sending apparatus 11 is an encoding side, and may be configured to: perform encoding and output encoded information. The encoded information is transmitted to the receiving apparatus 12 on a channel. The receiving apparatus 12 is a decoding side, and may be configured to: receive the encoded information sent by the sending apparatus, and decode the encoded information. The sending apparatus 11 and the receiving apparatus 12 may be terminal devices, network devices, servers, or other devices that can perform encoding and decoding. This is not limited in this embodiment of this application. In a possible implementation, the sending apparatus 11 may be a network device, and the receiving apparatus 12 may be a terminal device. The network device is, for example, an evolved NodeB (evolutional node B, eNB or eNodeB), a relay station, or an access point in an LTE communications system, a 5G NodeB (g node B, gNB) or a wireless transceiver device (next node, NX) in a future 5G communications system. The terminal device is, for example, a mobile phone, a tablet computer, a handheld device, a vehicle-mounted device, a wearable device, or a computing device that has a wireless connection function, or user equipment (user equipment, UE), a mobile station (mobile station, MS), and a terminal (terminal) in various forms. Other possible implementations are not limited in this embodiment.

In a 5G communications system, Polar (Polar) code is determined as an encoding and decoding scheme of a control channel. For example, in an application scenario, the network device performs Polar code encoding on DCI. Correspondingly, the terminal device performs blind detection on a PDCCH, to obtain required DCI. In another application scenario, the network device performs Polar code encoding on information carried in a physical broadcast channel (Physical Broadcast Channel, PBCH), for example, performs Polar code encoding on a master information block (Master Information Block, MIB) in the PBCH. Correspondingly, the terminal device performs blind detection on the PBCH, to obtain the information carried in the PBCH.

The Polar code is a linear block code. An encoding process is $u^N G_N = x^N$, where $u^N = (u_1, u_2,...,u_N)$ is a binary row vector, and a length is $N$ (namely, a mother code length). $G_N$ is a generator matrix of $N \times N$, and $G_N = F_2^{\otimes(\log_2(N))}$,

where $F_2 = \begin{bmatrix} 1 & 0 \\ 1 & 1 \end{bmatrix}$, and $F_2^{\otimes(\log_2(N))}$ is defined as a Kronecker (Kronecker) product of $\log_2 N$ matrices $F_2$. The foregoing related addition and multiplication operations are all addition and multiplication operations in a binary Galois Field (Galois Field).

In the Polar code encoding process, some bits in $u^N$ are used to carry information (for example, the DCI), and are referred to as information bits. A set of indexes of the bits is denoted as $\mathcal{A}$. Other bits in $u^N$ are set to fixed values pre-agreed on between a transmit end and a receive end and are referred to as frozen bits (or constant bits), and a set of indexes of the bits is denoted by a complementary set $\mathcal{A}^c$ of $\mathcal{A}$. Without loss of generality, the frozen bits are usually set to 0. It should be noted that the frozen bits may be randomly set provided that the transmit end and the receive end agree in advance.

The Polar code decoding is based on a successive cancellation (Successive Cancellation, SC) decoding algorithm, a successive cancellation list (SC List, SCL) decoding algorithm, or the like. In the SC decoding algorithm, sequential decoding starts from the first bit. The successive cancellation list decoding algorithm is an improvement of the SC decoding algorithm. After a plurality of candidate decoding paths are reserved for each bit, and all bits are decoded, all candidate decoding paths in the list are selected according to a criterion, to obtain a final decoding result.

FIG. 2 is a schematic diagram of a change of a code stream used by an existing network device to perform polarization encoding on DCI. As shown in FIG. 2, a base station generates CRC bits (16 bits) based on DCI of a terminal device, scrambles the CRC bits by using an RNTI of the terminal device, to obtain scrambled CRC bits, and uses the DCI of the terminal device and the scrambled CRC bits as information bits to perform Polar code encoding. In this way, the terminal device obtains a candidate PDCCH through blind detection, and performs Polar code decoding on the candidate PDCCH. The scrambled CRC bits are first descrambled by using the RNTI, and then CRC check is performed by using descrambled CRC bits. If the CRC check succeeds, the terminal device may determine that the candidate PDCCH includes the DCI required by the terminal device. However, the CRC check can be performed only when the last bit of the candidate PDCCH is decoded. Consequently, a delay of Polar code is relatively high.

For a prior-art problem of a long PDCCH blind detection time and high calculation complexity, in the Polar code encoding and decoding method provided in this embodiment of this application, CRC check, encoding, and decoding are separately performed on to-be-encoded information bit sequence segments, and decoding on a segment may be stopped in time when a problem occurs in decoding of the segment, thereby improving Polar code encoding and decoding efficiency.

The following describes in detail, by using specific embodiments, technical solutions of this application and how to resolve the foregoing technical problem by using the technical solutions of this application. The following several specific embodiments may be combined with each other, and a same or similar concept or process may not be described repeatedly in some embodiments.

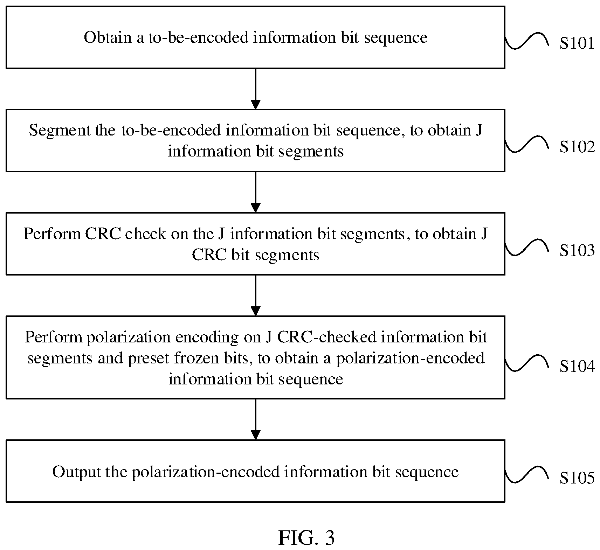

FIG. 3 is a flowchart of a Polar code encoding method according to an embodiment of this application. The Polar code encoding method provided in this embodiment of this application may be performed by a sending apparatus. As shown in FIG. 3, the Polar code encoding method provided in this embodiment may include the following steps.

S101: Obtain a to-be-encoded information bit sequence.

In different application scenarios, the to-be-encoded information bit sequences may be different.

Optionally, the to-be-encoded information bit sequence may be information carried in DCI or a PBCH.

S102: Segment the to-be-encoded information bit sequence, to obtain J information bit segments, where J is an integer greater than 1.

Specifically, the to-be-encoded information bit sequence may be evenly segmented based on values of lengths L and J of the to-be-encoded information bit sequence, or may not be evenly segmented. A segmentation rule is not limited in this embodiment. Optionally, the J information bit segments each include an equal quantity of information bits. In this case, L may be a multiple of J. A quantity of information bits included in each information bit segment is L/J. Optionally, the J information bit segments may include different quantities of information bits. For example, the to-be-encoded information bit sequence is 512 bits, and J is 8. In this case, a quantity of information bits included in each of four information bit segments may be 32 bits, and a quantity of information bits included in each of the other four information bit segments may be 96 bits.

It should be noted that a specific value of J is not limited in this embodiment, and is set based on a requirement.

S103: Separately perform CRC check on the J information bit segments, to obtain J CRC bit segments.

Specifically, the CRC check is separately performed on the J information bit segments, to generate the J CRC bit segments respectively corresponding to the J information bit segments. It may be understood that each CRC bit segment is related to only one information bit segment, and is unrelated to the other J-1 information bit segments.

It should be noted that a length of the CRC bit segment is not limited in this embodiment, provided that the sending apparatus and a receiving apparatus agree in advance. Optionally, lengths of the CRC bit segments respectively corresponding to the J information bit segments may be the same. For example, the to-be-encoded information bit sequence is divided into four information bit segments, and a length of a CRC bit segment corresponding to each information bit segment is 4 bits. Optionally, lengths of the CRC bit segments respectively corresponding to the J information bit segments may be different. For example, in four information bit segments, lengths of CRC bit segments respectively corresponding to two information bit segments each may be 8 bits, and lengths of CRC bit segments respectively corresponding to the other two information bit segments each may be 16 bits. It should be noted that 16 CRC bits are still used as an example herein. In actual application, a specific quantity of CRC bits may further be 20, 24, 28, 32, or the like. A processing principle is the same as that of the 16 CRC bits. Therefore, details are not described again.

S104: Perform polarization encoding on J CRC-checked information bit segments and preset frozen bits, to obtain a polarization-encoded information bit sequence.

The J CRC-checked information bit segments include the J information bit segments and the J CRC bit segments, and each of the CRC bit segments is concatenated at a tail of the information bit segment corresponding to the CRC bit segment.

The following describes, by using an example, the J CRC-checked information bit segments.

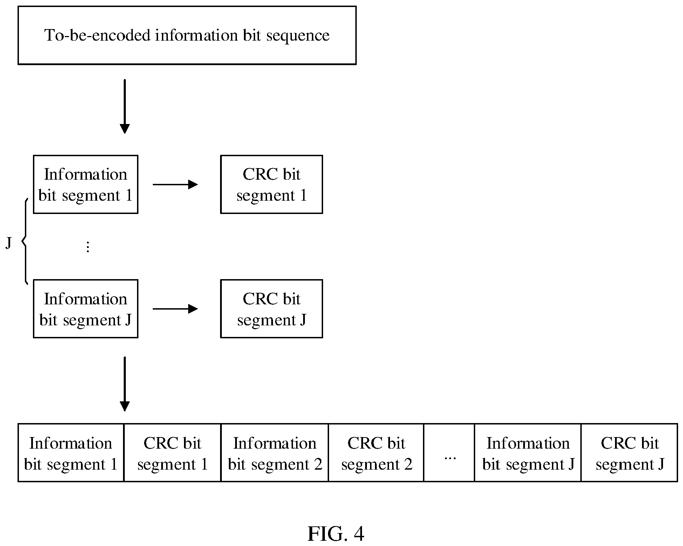

FIG. 4 is a schematic diagram of a change of a codeword in a polarization encoding process according to an embodiment of this application. As shown in FIG. 4, a to-be-encoded information bit sequence is segmented, to obtain J information bit segments: an information bit segment 1 to an information bit segment J. CRC check is separately performed on the J information bit segments, to obtain J CRC bit segments: a CRC bit segment 1 to a CRC bit segment J. The J information bit segments and the J CRC bit segments are concatenated to form J CRC-checked information bit segments. Each CRC-checked information bit segment includes one information bit segment and a CRC bit segment corresponding to the information bit segment. That is, the J CRC-checked information bit segments sequentially include the information bit segment 1, the CRC bit segment 1, an information bit segment 2, a CRC bit segment 2, ..., the information bit segment J, and the CRC bit segment J.

In this embodiment, when polarization encoding is performed on the J CRC-checked information bit segments and the preset frozen bits, the J CRC-checked information bit segments are carried on a plurality of information bits. In the process, the frozen bits are filled between the information bits. A set of a plurality of filled frozen bits is referred to as a frozen set. In a polarization-encoded information bit sequence, there are frozen bits corresponding to each CRC-checked information bit segment. It may be understood that there are frozen bits corresponding to each information bit segment and a CRC bit segment corresponding to the information bit segment, or there are frozen bits corresponding to each information bit segment. Correspondingly, when performing polarization decoding, a receiving apparatus may perform segmental polarization decoding on each information bit segment and the CRC bit corresponding to the information bit segment. When a problem occurs in decoding of a segment, the decoding may be stopped in time, thereby improving Polar code encoding and decoding efficiency.

It should be noted that, a plurality of construction manners, for example, a Polar weight (Polar Weight, PW) construction manner or a fractally enhanced kernel (FRActally eNhanced Kernel, FRANK) construction manner, may be used to determine a quantity and locations of the J CRC-checked information bit segments carried on the plurality of information bits and a quantity and locations of frozen bits in the frozen set. For a possible implementation of the PW construction manner, refer to the proposal R1-1611254 in 3GPP TSG RAN WG1 Meeting #87, and a specific construction manner is not particularly limited in this embodiment.

It should be noted that a scrambling manner of the preset frozen bits is not limited in this embodiment, provided that a sending apparatus and the receiving apparatus agree in advance.

Optionally, the preset frozen bits are scrambled by using an all-zero sequence.

Optionally, the preset frozen bits are scrambled by using an RNTI of a terminal device.

Specifically, in some application scenarios, the RNTI of the terminal device is used for scrambling, so that error correction performance of a codeword can be improved, and the receiving apparatus can accurately perform decoding. For example, for a PDCCH blind detection scenario, the sending apparatus may be a network device. For DCI of different terminal devices, the network device may scramble preset frozen bits by using RNTIs of the terminal devices. Therefore, when performing PDCCH blind detection, the terminal device may perform polarization decoding based on the RNTI of the terminal device, thereby improving accuracy of the PDCCH blind detection.

Optionally, in an implementation, that the preset frozen bits are scrambled by using an RNTI of a terminal device may include:

cyclically scrambling the RNTI of the terminal device on the frozen bits.

For example, if a frozen bit is 64 bits, and the RNIT of the terminal device is 16 bits, the RNTI of the terminal device may be cyclically scrambled on the 64-bit frozen bit, and a quantity of cycles is 64/16=4.

The RNTI of the terminal device is scrambled on each frozen bit, thereby further improving error correction performance of the codeword.

Optionally, in another implementation, that the preset frozen bits are scrambled by using an RNTI of a terminal device may include:

scrambling the RNTI of the terminal device on the frozen bits corresponding to at least one of the J information bit segments.

In the implementation, a frozen bit corresponding to at least one of the J information bit segments is scrambled by using the RNTI of the terminal device, and at most, frozen bits respectively corresponding to all the J information bit segments are scrambled by using the RNTI of the terminal device. The RNTI of the terminal device is scrambled on the frozen bits corresponding to the at least one information bit segment, thereby further improving the error correction performance of the codeword.

It should be noted that, that the RNTI of the terminal device is scrambled on frozen bits respectively corresponding to which information bit segment or information bit segments in the J information bit segments is not particularly limited in this embodiment, and is set based on a requirement. Optionally, based on an arrangement order of the J information bit segments, intervals between two adjacent scrambled information bit segments are equal. For example, a quantity of information bit segments is 16, and sequence numbers of the information bit segments are separately 1 to 16. The RNTI of the terminal device may be scrambled on frozen bits corresponding to information bit segments whose sequence numbers are 1, 3, 5, 7, 9, 11, 13, and 15. Alternatively, the RNTI of the terminal device may be scrambled on frozen bits corresponding to information bit segments whose sequence numbers are 2, 6, 10, and 14. Optionally, the RNTI of the terminal device may be scrambled on the frozen bits corresponding to the first or last information bit segment.

Optionally, in still another implementation, that the preset frozen bits are scrambled by using an RNTI of a terminal device may include:

that the frozen bits corresponding to each of the J information bit segments includes at least one frozen bit scrambled by using the RNTI of the terminal device.

In the implementation, the frozen bits corresponding to each of the J information bit segments is scrambled by using the RNTI of the terminal device. Specifically, at least one frozen bit is scrambled by using the RNTI of the terminal device, and at most all frozen bits are scrambled by using the RNTI of the terminal device. The RNTI of the terminal device is scrambled on at least one frozen bit in frozen bits corresponding to information bit segments, thereby further improving the error correction performance of the codeword.

It should be noted that, which frozen bit or frozen bits that is/are in frozen bits corresponding to information bit segments and on which the RNTI of the terminal device is scrambled is/are not particularly limited in this embodiment, and is/are set based on a requirement. Optionally, a quantity of bits between two adjacent scrambled frozen bits is equal. For example, a frozen bit is 16 bits, and sequence numbers are separately 1 to 16. The frozen bits whose sequence numbers are 1, 5, 9, and 13 may be scrambled by using the RNTI of the terminal device. Alternatively, frozen bits whose sequence numbers are 2, 4, 6, 8, 10, 12, 14, and 16 may be scrambled by using the RNTI of the terminal device. Optionally, scrambling may be performed at a front end or a back end of a frozen bit corresponding to an information bit segment. For example, a frozen bit is 16 bits, and sequence numbers are separately 1 to 16. Frozen bits whose sequence numbers are 1 to 8 or 9 to 16 may be scrambled by using the RNTI of the terminal device.

S 105: Output the polarization-encoded information bit sequence.

The Polar code encoding method provided in this embodiment includes: obtaining a to-be-encoded information bit sequence; segmenting the to-be-encoded information bit sequence, to obtain J information bit segments; separately performing CRC check on the J information bit segments, to obtain J CRC bit segments; performing polarization encoding on J CRC-checked information bit segments and preset frozen bits, to obtain a polarization-encoded information bit sequence, and outputting the polarization-encoded information bit sequence. According to the Polar code encoding method provided in this embodiment, the to-be-encoded information bit sequence is segmented, and a CRC bit segment is generated based on each information bit segment. Segmental polarization encoding may be performed on each information bit segment and the CRC bit segment corresponding to the information bit segment, so that the receiving apparatus can perform polarization decoding on each information bit segment and the CRC bit segment corresponding to the information bit segment. When a problem occurs in decoding of a segment, the decoding may be stopped in time, thereby improving Polar code encoding and decoding efficiency.

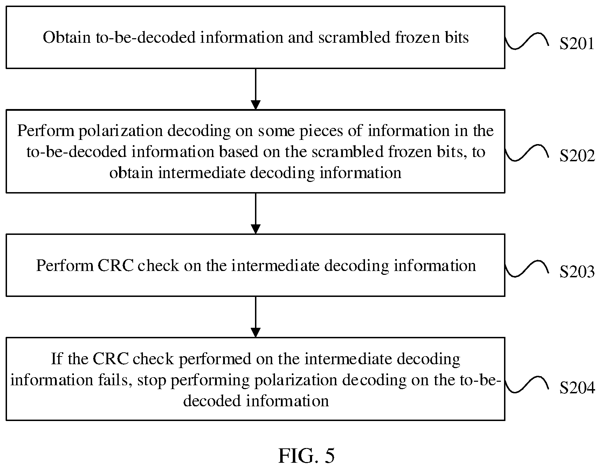

FIG. 5 is a flowchart of a Polar code decoding method according to an embodiment of this application. The Polar code decoding method provided in this embodiment of this application may be performed by a receiving apparatus. As shown in FIG. 5, the Polar code decoding method provided in this embodiment may include the following steps.

S201: Obtain to-be-decoded information and scrambled frozen bits.

The to-be-decoded information is information received by the receiving apparatus after polarization-encoded information sent by a sending apparatus is transmitted through a channel. In different application scenarios, the to-be-decoded information may be different.

Optionally, in a PDCCH blind detection scenario, the to-be-decoded information may be a candidate PDCCH. The candidate PDCCH may be determined through searching by a terminal device in a CSS and a USS based on a PDCCH location, a PDCCH format, and a DCI format. A quantity of candidate PDCCHs is not limited in this embodiment.

Optionally, in a PBCH blind detection scenario, the to-be-decoded information may be a candidate PBCH. A method for determining a candidate PBCH is not limited in this embodiment, and an existing method may be used.

A quantity of scrambled frozen bits and locations of the scrambled frozen bits may be constructed in a plurality of manners, and are agreed by the sending apparatus and the receiving apparatus in advance.

Optionally, the scrambled frozen bits may be scrambled by using an RNTI of the terminal device.

For details, refer to the description in S 104 in the embodiment shown in FIG. 3. A principle is similar, and details are not described herein again.

S202: Perform polarization decoding on some pieces of information in the to-be-decoded information based on the scrambled frozen bits, to obtain intermediate decoding information.

The intermediate decoding information includes I information bit segments and CRC bit segments respectively corresponding to the I information bit segments, and each of the CRC bit segments is concatenated at a tail of the information bit segment corresponding to the CRC bit segment, where I is a positive integer.

The to-be-decoded information includes J information bit segments and CRC bit segments respectively corresponding to the J information bit segments, where J is a positive integer, and I is less than J.

Specifically, the receiving apparatus may perform polarization decoding by using an SC decoding algorithm or an SCL decoding algorithm. Sequential decoding starts from the first bit of to-be-decoded information. After polarization decoding is performed on some pieces of information in the to-be-decoded information based on the scrambled frozen bits, the intermediate decoding information may be obtained. In this case, polarization decoding is not completed on all to-be-decoded information. The to-be-decoded information includes J information bit segments and CRC bit segments respectively corresponding to the J information bit segments, and each of the CRC bit segments is concatenated at a tail of the information bit segment corresponding to the CRC bit segment, where J is a positive integer. However, the intermediate decoding information includes I information bit segments and CRC bit segments respectively corresponding to the I information bit segments, and each of the CRC bit segments is concatenated at the tail of the information bit segment corresponding to the CRC bit segment, where I is a positive integer, and I is less than J.

It can be learned that when performing polarization decoding, the receiving apparatus may gradually obtain an information bit segment and a CRC bit segment corresponding to the information bit segment.

S203: Perform CRC check on the intermediate decoding information.

Optionally, that perform CRC check on the intermediate decoding information may include:
separately perform CRC check on the I information bit segments in sequence based on an arrangement order of the I information bit segments.

Specifically, each CRC bit segment is related to only one information bit segment, and is unrelated to another information bit segment. That the CRC check is performed on the intermediate decoding information means that CRC check is performed, based on each CRC bit segment, on an information bit segment corresponding to the CRC bit segment.

The following uses an example for description.

It is assumed that 1=3. The intermediate decoding information includes three information bit segments and CRC bit segments respectively corresponding to the three information bit segments, and may be sequentially denoted as an information bit segment 1, a CRC bit segment 1, an information bit segment 2, a CRC bit segment 2, an information bit segment 3, and a CRC bit segment 3. That perform CRC check on the intermediate decoding information may include: performing CRC check on the information bit segment 1 based on the CRC bit segment 1, performing CRC check on the information bit segment 2 based on the CRC bit segment 2, and performing CRC check on the information bit segment 3 based on the CRC bit segment 3.

S204: If the CRC check performed on the intermediate decoding information fails, stop performing polarization decoding on the to-be-decoded information.

It can be learned that, according to the Polar code decoding method provided in this embodiment, an information bit segment and a CRC bit segment corresponding to the information bit segment may be gradually obtained in a decoding process. CRC check is performed on I information bit segments and CRC bit segments respectively corresponding to the I information bit segments. If the CRC check fails, it indicates that an error has occurred, and decoding may be stopped in advance and it is determined that the decoding fails. Compared with the prior art, a decoding error does not need to be determined after polarization decoding is completed on all to-be-decoded information, and the decoding error may be determined in an intermediate decoding stage, thereby reducing calculation complexity and reducing a decoding time.

Optionally, the Polar code decoding method provided in this embodiment may further include:
if the CRC check performed on the intermediate decoding information succeeds, returning to a step of continuing to perform polarization decoding, to obtain updated intermediate decoding information, performing CRC check on the updated intermediate decoding information, until the CRC check fails, then stopping performing polarization decoding, or until the CRC check succeeds, then completing polarization decoding on all information in the to-be-decoded information, and outputting all information bit segments obtained after polarization decoding is completed on the to-be-decoded information.

The updated intermediate decoding information includes I+1 information bit segments and CRC bit segments respectively corresponding to the 1+1 information bit segments, and each of the CRC bit segments is concatenated at a tail of the information bit segment corresponding to the CRC bit segment.

Specifically, the Polar code decoding method provided in this embodiment is a cyclic execution process. When decoding is performed at a tail of a CRC bit segment, CRC check is performed on an information bit segment that exists before the CRC bit segment, to determine whether the CRC check fails. If the CRC check fails, decoding may be ended in advance and it is determined that the decoding fails. If the CRC check succeeds, polarization decoding continues to be performed.

The following uses a specific example for description.

It is assumed that J=5, that is, the to-be-decoded information includes 5 information bit segments and CRC bit segments respectively corresponding to the 5 information bit segments.

First, polarization decoding is performed on some pieces of information in the to-be-decoded information based on the scrambled frozen bits, to obtain intermediate decoding information. The intermediate decoding information includes a first information bit segment (denoted as an information bit segment 1) and a first CRC bit segment (denoted as a CRC bit segment 1). The CRC bit segment 1 is concatenated at a tail of the information bit segment 1 and corresponds to the information bit segment 1.

CRC check is performed on the first information bit segment based on the CRC bit segment 1.

If the CRC check succeeds, polarization decoding continues to be performed on the to-be-decoded information.

Then, polarization decoding continues to be performed on some pieces of information in the to-be-decoded information based on the scrambled frozen bits, to obtain the intermediate decoding information. The intermediate decoding information includes the information bit segment 1 and the CRC bit segment 1, a second information bit segment (denoted as an information bit segment 2), and a second CRC bit segment (denoted as a CRC bit segment 2). The CRC bit segment 2 is concatenated at a tail of the information bit segment 2 and corresponds to the information bit segment 2.

CRC check is performed on the first information bit segment based on the CRC bit segment 1, and CRC check is performed on the second information bit segment based on the CRC bit segment 2.

If the CRC check fails, polarization decoding on the to-be-decoded information is stopped.

Optionally, that the CRC check performed on the intermediate decoding information fails in S204 may include: that CRC check performed on any one of the I information bit segments fails.

The following uses an example for description.

It is assumed that 1=3. The intermediate decoding information includes three information bit segments and CRC bit segments respectively corresponding to the three information bit segments. The three information bit segments are sequentially denoted as an information bit segment 1, an information bit segment 2, and an information bit segment 3. If CRC check performed on the information bit segment 1 fails, or CRC check performed on the information bit segment 2 fails, or CRC check performed on the information bit segment 3 fails, it may be determined that the CRC check performed on the intermediate decoding information fails.

Optionally, for each information bit segment, that CRC check performed on the information bit segment fails may include:

obtaining L decoding paths by using an SCL algorithm, where L indicates a search width, and L is a positive integer; and

if CRC check performed on each of the L decoding paths fails, determining that the CRC check performed on the information bit segment fails.

It should be noted that a specific value of L is not limited in this embodiment. L indicates a search width of the SCL algorithm, that is, each time CRC check is performed, a quantity of decoding paths that survive in the list (list) is L.

The following uses an example for description.

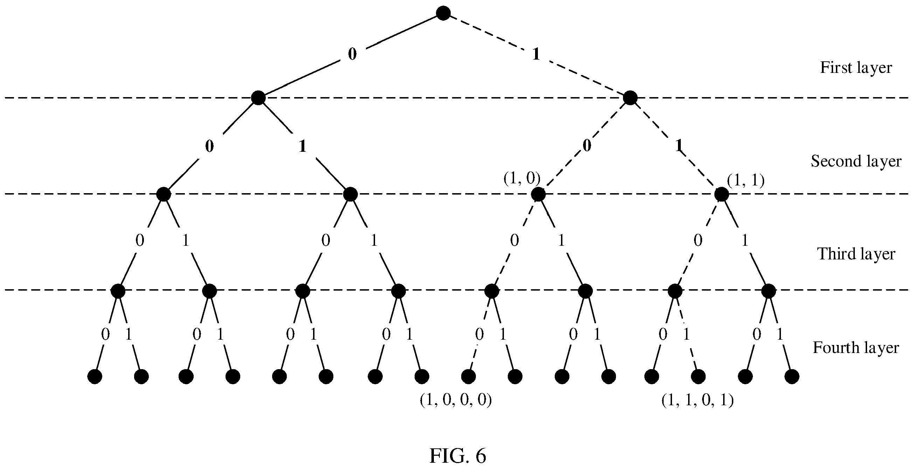

FIG. 6 is a schematic structural diagram of decoding by using an SCL algorithm according to an embodiment of this application. For ease of description, as shown in FIG. 6, it is assumed that each information bit segment and a CRC bit segment corresponding to the information bit segment include 2 bits in total, and L=2.

For example, polarization decoding is performed on some pieces of information in to-be-decoded information based on scrambled frozen bits, to obtain intermediate decoding information. The intermediate decoding information includes: an information bit segment 1 and a CRC bit segment 1 (2 bits in total, corresponding to the first layer and the second layer in FIG. 6). Two decoding paths are obtained by using the SCL algorithm, for example, paths shown by dashed lines in the first layer and the second layer in FIG. 6. The intermediate decoding information is separately (1, 0) and (1, 1). If CRC check performed on (1, 0) fails, and CRC check performed on (1, 1) fails, it may be determined that CRC check performed on the information bit segment 1 fails.

For another example, polarization decoding is performed on some pieces of information in to-be-decoded information based on scrambled frozen bits, to obtain intermediate decoding information. The intermediate decoding information includes: an information bit segment 1 and a CRC bit segment 1 (2 bits in total, corresponding to the first layer and the second layer in FIG. 6), and an information bit segment 2 and a CRC bit segment 2 (2 bits in total, corresponding to the third layer and the fourth layer in FIG. 6). Two decoding paths are obtained by using an SCL algorithm, for example, paths shown by dashed lines in the first layer to the fourth layer in FIG. 6. The intermediate decoding information is separately (1, 0, 0, 0) and (1, 1, 0, 1). For CRC check performed on the information bit segment 2, if CRC check performed on (0, 0) fails and CRC check performed on (0, 1) fails, it may be determined that CRC check performed on the information bit segment 2 fails.

Optionally, that CRC check performed on the intermediate decoding information succeeds may include: that CRC check performed on each of I information bit segments succeeds.

The following uses an example for description.

It is assumed that 1=3. The intermediate decoding information includes three information bit segments and CRC bit segments respectively corresponding to the three information bit segments. The three information bit segments are sequentially denoted as an information bit segment 1, an information bit segment 2, and an information bit segment 3. If CRC check performed on the information bit segment 1 succeeds, CRC check performed on the information bit segment 2 succeeds, and CRC check performed on the information bit segment 3 succeeds, it may be determined that the CRC check performed the intermediate decoding information succeeds.

Optionally, for each information bit segment, that CRC check performed on the information bit segment succeeds may include:

obtaining L decoding paths by using an SCL algorithm, where L indicates a search width, and L is a positive integer; and
if CRC check performed on any one of the L decoding paths succeeds, determining that the CRC check performed on the information bit segment succeeds.

The following further uses FIG. 6 as an example for description.

For example, the intermediate decoding information includes: the information bit segment 1 and the CRC bit segment 1 (2 bits in total, corresponding to the first layer and the second layer in FIG. 6). Two decoding paths are obtained by using the SCL algorithm, for example, paths shown by dashed lines in the first layer and the second layer in FIG. 6. The intermediate decoding information is separately (1, 0) and (1, 1). If the CRC check performed on (1, 0) succeeds, or the CRC check performed on (1, 1) succeeds, it may be determined that the CRC check performed on the information bit segment 1 succeeds.

For another example, the intermediate decoding information includes: the information bit segment 1 and the CRC bit segment 1 (2 bits in total, corresponding to the first layer and the second layer in FIG. 6), and the information bit segment 2 and the CRC bit segment 2 (2 bits in total, corresponding to the third layer and the fourth layer in FIG. 6). Two decoding paths are obtained by using the SCL algorithm, for example, paths shown by dashed lines in the first layer to the fourth layer in FIG. 6. The intermediate decoding information is separately (1, 0, 0, 0) and (1, 1, 0, 1). For the CRC check performed on the information bit segment 2, if the CRC check performed on (0, 0) succeeds, or the CRC check performed on (0, 1) succeeds, it may be determined that the CRC check performed on the information bit segment 2 succeeds.

Optionally, if the to-be-decoded information is candidate information determined through blind detection, the Polar code decoding method provided in this embodiment may further include:
performing the foregoing polarization decoding and CRC check steps on N pieces of candidate information on which polarization decoding is not performed and that are determined through blind detection, until a quantity of first candidate information is equal to N, or until a quantity of the first candidate information is equal to a preset maximum quantity of decoding attempts, or until second candidate information is obtained; and outputting all information bit segments obtained after polarization decoding is completed on the second candidate information, where N is a positive integer.

The first candidate information is candidate information on which the CRC check fails. The second candidate information is candidate information on which polarization decoding is completed on all information of the candidate information and on which the CRC check succeeds.

Specifically, in the foregoing application scenario, the to-be-decoded information is candidate information determined through blind detection. Optionally, the candidate information determined through blind detection may be used to determine a PDCCH or a PBCH. In this case, there are a plurality of pieces of candidate information. Steps S201 to S204 may be performed for each candidate information, to determine whether to stop performing polarization decoding in advance. If it is determined to stop performing polarization decoding in advance for the current candidate information, steps S201 to S204 continue to be performed for next candidate information on which polarization decoding is not performed. Finally, a blind detection result is obtained.

The foregoing polarization decoding is performed on the candidate information obtained through blind detection. In a process of performing polarization decoding on each candidate information, if CRC check performed on an intermediate decoding result fails, it indicates that an error has occurred, decoding on the candidate information may be stopped in advance, and a next candidate information may be attempted to be decoded. Compared with the prior art, a decoding error does not need to be determined after polarization decoding is completed on each candidate information, and whether the candidate information is decoded incorrectly may be determined in an intermediate decoding stage, thereby reducing calculation complexity of blind detection and reducing a blind detection time.

It should be noted that specific values of N and the preset maximum quantity of decoding attempts are not limited in this embodiment.

It should be noted that, how to select a path in the SCL algorithm is not limited in this embodiment, and an existing SCL decoding algorithm may be used.

The following example describes how to select a path. The scrambled frozen bits may be scrambled by using an RNTI of a terminal device.

In the SCL algorithm, a path formed from a root node to any node corresponds to a path metric (path metric, PM). When each layer is extended to a next layer, L paths at a current layer are selected according to a preset rule, where L may be referred to as a search width, and L is a positive integer. A PM of each decoding path is calculated according to a formula $PM_\ell^{(i)} = \sum_{j=1}^{i} \ln\left(1 + e^{-(1-2\hat{u}_j)\cdot L_n^{(j)}[\ell]}\right)$ , where $PM_\ell^{(i)}$ represents a PM value of a decoding path

$\ell \in \{1,2,...,L\}$ when decoding is performed to the $i \in \{1,2,...,N\}$th step (layer). $L_n^{(j)}[\ell] = \ln\dfrac{W_N^{(i)}\left(y_1^N, \hat{u}^{i-1}[\ell]|0\right)}{W_N^{(i)}\left(y_1^N, \hat{u}^{i-1}[\ell]|1\right)}$.

An updated rule of $PM_\ell^{(i)}$ is as follows:

$$PM_\ell^{(i)} \approx \begin{cases} PM_\ell^{(i)} & \text{if } \hat{u}_i[\ell] = \delta\left(L_n^{(j)}[\ell]\right), \\ PM_\ell^{(i)} + \left|L_n^{(j)}[\ell]\right|, & \text{otherwise.} \end{cases}$$

$$\delta(x) = \frac{1}{2}\left(1 - \text{sgn}(x)\right).$$

$PM_\ell^{(i)}$ is updated when a decoding path is split. If a direction of decoding path splitting is inconsistent with a symbol of a log likelihood rate (likelihood Rate, LLR) value, a penalty item $\left|L_n^{(j)}[\ell]\right|$ is added.

In this embodiment, in a PDCCH blind detection scenario, a network device may place an RNTI of each terminal device at a frozen bit location of a codeword sent to the terminal device. During decoding, the terminal device uses an RNTI sequence of the terminal device as a determining sequence of frozen bits. When the terminal device performs decoding, by using the RNTI of the terminal device, on the received sequence that includes an RNTI of another terminal device, a $\hat{u}_i[\ell] = \delta\left(L_n^{(j)}[\ell]\right)$ relationship is not met at locations at which RNTI sequences are inconsistent. Consequently, a penalty item $\left|L_n^{(j)}[\ell]\right|$ is added to $PM_\ell^{(i)}$. A penalty item is added to a path on which correctly decoding is performed. As a result, the PM value fails to be updated. Consequently, the CRC check fails. When all decoding paths fail to be checked, decoding is stopped in advance.

The following describes decoding performance in this application by using a specific example and a simulation experiment.

In an example, Table 1 shows decoding-related parameters during PDCCH blind detection.

**Table 1 Decoding-related parameters**

| Channel | Additive white Gaussian noise (Additive White Gaussian Noise, AWGN) |
|---|---|
| Modulation | Binary phase shift keying (Binary Phase Shift Keying, BPSK) |
| Frozen set selection | PW |

(continued)

| Codeword construction | CA-SCL with single longer CRC/SCA-SCL with segmented CRC (Polar code that is constructed by using the PW and that uses CRC-assisted decoding, single-segmented CRC/Polar code that is constructed by using the PW and that uses CRC-assisted decoding, and segmented CRC) |
|---|---|
| Decoding algorithm | CA-SCL with single longer CRC/SCA-SCL with Segmented CRC (CRC-assisted decoding, single-segmented CRC/CRC-assisted decoding, and segmented CRC) L=8 (search width) |
| Length of a to-be-encoded information bit sequence | {48, 64, 80}-X |
| Length of an encoded information bit sequence | {256, 512} |
| CRC bit length | X=16 bits |

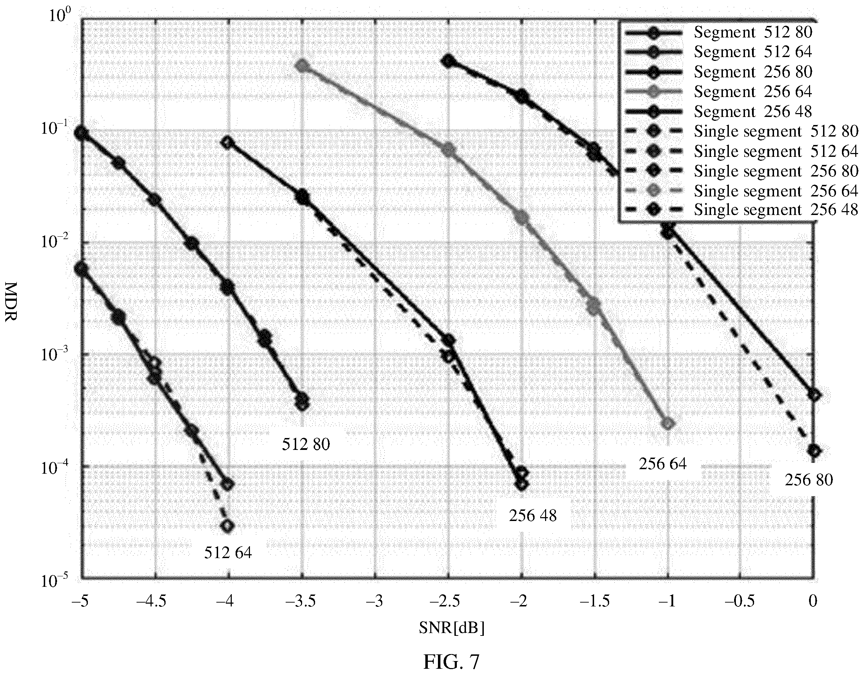

In Table 1, CA-SCL with single longer CRC represents an existing Polar code encoding and decoding method, and SCA-SCL with Segmented CRC is the Polar code encoding and decoding method provided in the embodiments of this application. If J=4, a length of each CRC bit segment is 4 bits. In combinations of to-be-encoded information bit sequences of different lengths and encoded information bit sequences of different lengths, for the existing encoding and decoding method and the encoding and decoding method provided in the embodiments of this application, performance comparison is performed based on a miss detection ratio (Miss Detection Ratio, MDR), a decoding early termination ratio (Early Termination Ratio, ETR), and a calculation complexity gain. FIG. 7 to FIG. 9 are schematic diagrams of decoding performance according to an embodiment of this application.

As shown in FIG. 7, a horizontal coordinate represents a signal-to-noise ratio (Signal-to-Noise Ratio, SNR), and a vertical coordinate represents an MDR. FIG. 7 shows the performance comparison between the existing encoding and decoding method and the encoding and decoding method provided in the embodiments of this application when combinations are separately {512, 80}, {512, 64}, {256, 80}, {256, 64}, and {256, 48}. Under a same SNR, an MDR of the encoding and decoding method provided in the embodiments of this application is very close to that of the existing encoding and decoding method.

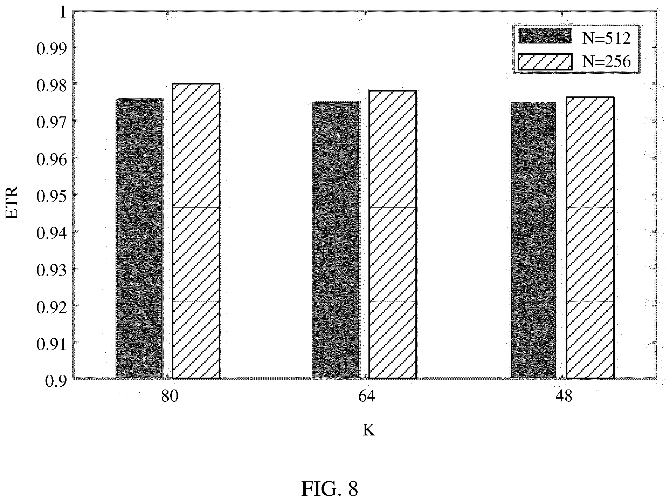

As shown in FIG. 8, a horizontal coordinate K represents a length of a to-be-encoded information bit sequence, and a vertical coordinate represents an ETR.

$$\text{ETR} = \frac{\text{Times of decoding that implements early termination}}{\text{Decoding times in total}}$$ . The definition of early termination is that a decoder stops decoding before the last bit is decoded. In an application scenario of PDCCH blind detection, according to the Polar code decoding method provided in the embodiments when J=4, most decoding may be stopped in advance.

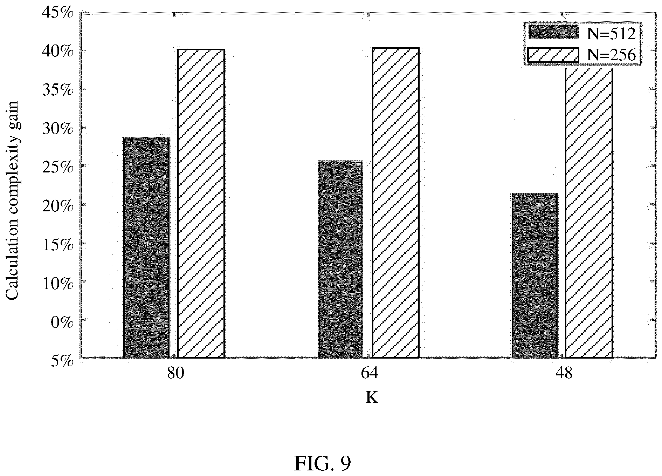

As shown in FIG. 9, a horizontal coordinate K represents a length of a to-be-encoded information bit sequence, and a vertical coordinate represents a calculation complexity gain. The calculation complexity is complexity obtained by a decoder through calculation based on an SCL algorithm. Complexity of an SCL decoding algorithm may be represented as:

$$C_{scd} = \sum_{i=0}^{N-1} l(i)n(i), \quad n(i) = \sum_{j=0}^{b} 2^j, i = 1, 2, ..., N-1.$$

where b is a quantity of rightmost consecutive 0s represented by a binary number of i, and l(i) is a quantity of decoding paths in a real list when decoding is performed on an $i^{th}$ step.

The complexity of sorting PM values of the SCL is related to a sorting algorithm. In the example, bitonic sorting (bitonic sorter) is used. Therefore, equivalent complexity of the sorting may be represented as:

$$C_{sort}(l(i)) = \frac{l(i)}{2}(\log_2 l(i) + 1)(\log_2 l(i) + 2)$$

Therefore, the complexity of the SCL decoding algorithm may be represented as:

$$C_{scl} = \sum_{i=0}^{N-1} l(i) C_{scd} + \sum_{i \in \mathcal{A}} C_{sort}\big(l(i)\big).$$

Complexity calculation of an SCA-SCL (segmented-crc-adied SCL) decoding algorithm provided in this embodiment of this application is related to a stop location. If a subscript of the stop location is t, the complexity is represented as:

$$C_{sca-scl} = \sum_{i=0}^{t} l(i) C_{scd} + \sum_{i \in \mathcal{A}}^{t} C_{sort}\big(l(i)\big),$$

The Polar code decoding method provided in the embodiments includes: obtaining to-be-decoded information and scrambled frozen bits; performing polarization decoding on some pieces of information in the to-be-decoded information based on the scrambled frozen bits, to obtain intermediate decoding information; performing CRC check on the intermediate decoding information; and if the CRC check performed on the intermediate decoding information fails, stopping performing polarization decoding on the to-be-decoded information. According to the Polar code decoding method provided in the embodiments, an information bit segment and a CRC bit segment corresponding to the information bit segment may be gradually obtained in a decoding process. CRC check is performed on I information bit segments and CRC bit segments respectively corresponding to the I information bit segments. If the CRC check fails, it indicates that an error has occurred, and decoding may be stopped in advance and it is determined that the decoding fails, thereby reducing computational complexity and reducing a decoding time.

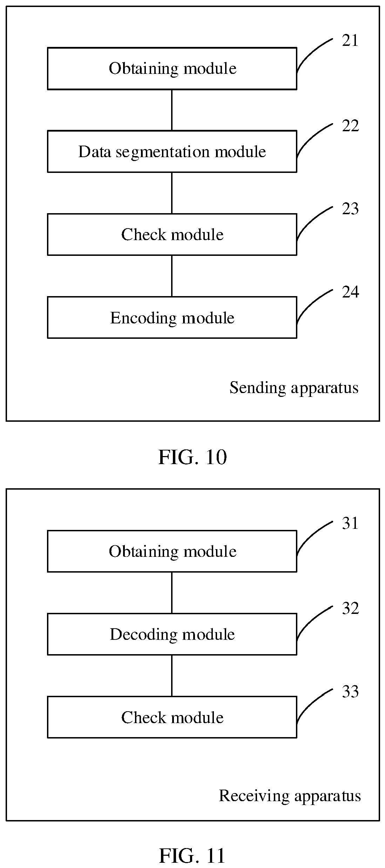

FIG. 10 is a schematic structural diagram of a sending apparatus according to an embodiment of this application. The sending apparatus provided in this embodiment may perform the Polar code encoding method provided in the method embodiments shown in FIG. 3 and FIG. 4. As shown in FIG. 10, the sending apparatus provided in this embodiment may include:

an obtaining module 21, configured to obtain a to-be-encoded information bit sequence;
a data segmentation module 22, configured to segment the to-be-encoded information bit sequence, to obtain J information bit segments, where J is an integer greater than 1;
a check module 23, configured to separately perform CRC check on the J information bit segments, to obtain J CRC bit segments; and
an encoding module 24, configured to: perform polarization encoding on J CRC-checked information bit segments and preset frozen bits, to obtain a polarization-encoded information bit sequence; and output the polarization-encoded information bit sequence, where the J CRC-checked information bit segments include the J information bit segments and the J CRC bit segments, and each of the CRC bit segments is concatenated at a tail of the information bit segment corresponding to the CRC bit segment.

Optionally, the preset frozen bits are scrambled by using an RNTI of a terminal device.
Optionally, the encoding module 24 is specifically configured to:
cyclically scramble the RNTI of the terminal device on the frozen bits.
Optionally, the encoding module 24 is specifically configured to:
scramble the RNTI of the terminal device on frozen bits corresponding to at least one of the J information bit segments.
Optionally, the encoding module 24 is specifically configured to:
Indicate that frozen bits corresponding to each of the J information bit segments include at least one frozen bit scrambled by using the RNTI of the terminal device.
Optionally, the to-be-encoded information bit sequence is information carried in DCI or a PBCH.
Optionally, the J information bit segments each include an equal quantity of information bits.
The sending apparatus provided in this embodiment of this application is configured to perform the Polar code encoding method provided in the method embodiments shown in FIG. 3 and FIG. 4. A technical principle and a technical effect of the sending apparatus are similar to those of the Polar code encoding method provided in the method embodiments. Details are not described herein again.
FIG. 11 is a schematic structural diagram of a receiving apparatus according to an embodiment of this application. The receiving apparatus provided in this embodiment may perform the Polar code decoding method provided in the method embodiments shown in FIG. 5 to FIG. 9. As shown in FIG. 11, the receiving apparatus provided in this embodiment may include:

an obtaining module 31, configured to obtain to-be-decoded information and scrambled frozen bits;

a decoding module 32, configured to perform polarization decoding on some pieces of information in the to-be-decoded information based on the scrambled frozen bits, to obtain intermediate decoding information, where the intermediate decoding information includes I information bit segments and CRC bit segments respectively corresponding to the I information bit segments, and each of the CRC bit segments is concatenated at a tail of the information bit segment corresponding to the CRC bit segment, where I is a positive integer; and the to-be-decoded information includes J information bit segments and CRC bit segments respectively corresponding to the J information bit segments, where J is a positive integer, and I is less than J;

a check module 33, configured to perform CRC check on the intermediate decoding information; and

the decoding module 32, further configured to: if the CRC check performed on the intermediate decoding information fails, stop performing polarization decoding on the to-be-decoded information.

Optionally, the scrambled frozen bits are scrambled by using an RNTI of the terminal device.

Optionally, the to-be-decoded information is candidate information determined through blind detection.

The decoding module 32 is further configured to perform the foregoing polarization decoding step on N pieces of candidate information on which polarization decoding is not performed and that are determined through blind detection, and the check module 33 is further configured to: perform the foregoing CRC check step, until a quantity of first candidate information is equal to N, or until a quantity of the first candidate information is equal to a preset maximum quantity of decoding attempts, or until second candidate information is obtained, and output all information bit segments obtained after polarization decoding is completed on the second candidate information, where N is a positive integer.

The first candidate information is candidate information on which the CRC check fails. The second candidate information is candidate information on which polarization decoding is completed on all information of the candidate information and on which the CRC check succeeds.

Optionally, the candidate information determined through blind detection is used to determine a PDCCH or a PBCH.

Optionally, the decoding module 32 is further configured to: if the CRC check performed on the intermediate decoding information succeeds, return to a step of continuing to perform polarization decoding, to obtain updated intermediate decoding information.

The check module 33 is further configured to: perform CRC check on the updated intermediate decoding information, until the CRC check fails, then stop performing polarization decoding, or until the CRC check succeeds, then complete polarization decoding on all information in the to-be-decoded information, and output all information bit segments obtained after polarization decoding is completed on the to-be-decoded information.

The updated intermediate decoding information includes I+1 information bit segments and CRC bit segments respectively corresponding to the I+1 information bit segments, and each of the CRC bit segments is concatenated at a tail of the information bit segment corresponding to the CRC bit segment.

Optionally, the check module 33 is specifically configured to:
determine that CRC check performed on each of I information bit segments succeeds.

Optionally, the check module 33 is specifically configured to:

obtain L decoding paths by using a successive cancellation list SCL algorithm, where L indicates a search width, and L is a positive integer; and
if CRC check performed on any one of the L decoding paths succeeds, determine that the CRC check performed on the information bit segment succeeds.

Optionally, the check module 33 is specifically configured to:
separately perform, by the receiving apparatus, CRC check on the I information bit segments in sequence based on an arrangement order of the I information bit segments.

Optionally, the check module 33 is specifically configured to:
determine that CRC check performed on any one of the I information bit segments fails.

Optionally, the check module 33 is specifically configured to:

obtain L decoding paths by using the SCL algorithm, where L indicates a search width, and L is a positive integer; and
if CRC check performed on each of the L decoding paths fails, determine that the CRC check performed on the information bit segment fails.

The receiving apparatus provided in this embodiment of this application is configured to perform the Polar code decoding method provided in the method embodiments shown in FIG. 5 to FIG. 9. A technical principle and a technical effect of the receiving apparatus are similar to those of the Polar code decoding method provided in the method embodiments. Details are not described herein again.

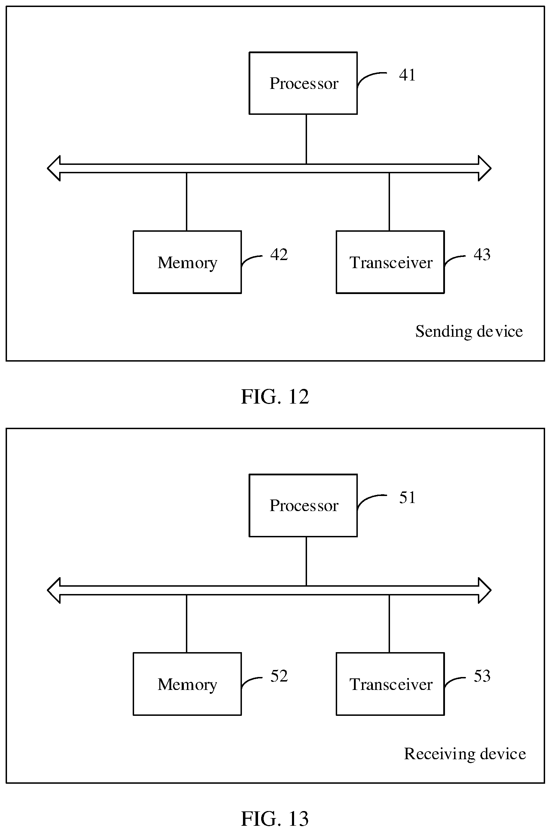

FIG. 12 is a schematic structural diagram of a sending device according to an embodiment of this application. As shown in FIG. 12, the sending device includes a processor 41, a memory 42, and a transceiver 43. The memory 42 is configured to store an instruction, the transceiver 43 is configured to communicate with another device, and the processor 41 is configured to execute the instruction stored in the memory 42, so that the sending device performs the Polar code encoding method provided in the embodiments shown in FIG. 3 and FIG. 4. Specific implementations and technical effects are similar. Details are not described herein again.

FIG. 13 is a schematic structural diagram of a receiving device according to an embodiment of this application. As shown in FIG. 13, the receiving device includes a processor 51, a memory 52, and a transceiver 53. The memory 52 is configured to store an instruction, the transceiver 53 is configured to communicate with another device, and the processor 51 is configured to execute the instruction stored in the memory 52, so that the receiving device performs the Polar code decoding method provided in the embodiments shown in FIG. 5 to FIG. 9. Specific implementations and technical effects are similar. Details are not described herein again.

An embodiment of this application further provides a storage medium. The storage medium stores a computer program, and the computer program is used to implement the Polar code encoding method provided in the method embodiments shown in FIG. 3 and FIG. 4, or implement the Polar code decoding method provided in the embodiments shown in FIG. 5 to FIG. 9.

An embodiment of this application further provides a computer program product. The computer program product includes computer program code; and when the computer program code is run on a computer, the computer is enabled to perform the Polar code encoding method provided in the method embodiments shown in FIG. 3 and FIG. 4, or perform the Polar code decoding method provided in the embodiments shown in FIG. 5 to FIG. 9.

An embodiment of this application further provides a chip, including a memory and a processor. The memory is configured to store a computer program, and the processor is configured to invoke the computer program from the memory and run the computer program, so that the chip performs the Polar code encoding method provided in the method embodiments shown in FIG. 3 and FIG. 4, or perform the Polar code decoding method provided in the embodiments shown in FIG. 5 to FIG. 9.

In the several embodiments provided in this application, it should be understood that the disclosed device and method may be implemented in other manners. For example, the described device embodiments are merely exemplary. For example, the module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical units, that is, may be located in one position, or may be distributed on a plurality of network units. Some or all the modules may be selected based on actual requirements to achieve the objectives of the solutions of the embodiments.

In addition, function modules in the embodiments of this application may be integrated into one processing unit, or each of the modules may exist alone physically, or two or more modules are integrated into one unit. The unit integrated from the modules may be implemented in a form of hardware, or may be implemented in a form of hardware in addition to a software function unit.

When the foregoing integrated module is implemented in a form of a software function module, the integrated unit may be stored in a computer-readable storage medium. The software function module is stored in a storage medium and includes several instructions for instructing a computer device (which may be a personal computer, a server, or a network device) or a processor (English: processor) to perform some of the steps of the methods described in the embodiments of this application.

It should be understood that the processor may be a central processing unit (English: Central Processing Unit, CPU for short), or may be another general purpose processor, a digital signal processor (English: Digital Signal Processor, DSP for short), an application-specific integrated circuit (English: Application Specific Integrated Circuit, ASIC for short), or the like. The general purpose processor may be a microprocessor, or the processor may be any conventional processor or the like. The steps of the methods disclosed with reference to this application may be directly implemented by a hardware processor, or may be implemented by a combination of hardware and a software module in a processor.

The memory may include a high-speed RAM memory, or may further include a non-volatile memory NVM, for example, at least one magnetic disk memory. Alternatively, the memory may be a USB flash drive, a removable hard disk, a read-only memory, a magnetic disk, an optical disc, or the like.

The bus may be an industry standard architecture (Industry Standard Architecture, ISA) bus, a peripheral component (Peripheral Component, PCI) interconnect bus, an extended industry standard architecture (Extended Industry Standard Architecture, EISA) bus, or the like. The bus may be classified into an address bus, a data bus, a control bus, and the like. For ease of representation, the bus in the accompanying drawings of this application is not limited to only one bus or only one type of bus.

The storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The storage medium may be any available medium accessible to a general purpose or dedicated computer.

For example, a storage medium is coupled to a processor, so that the processor can read information from the storage medium or write information into the storage medium. Certainly, the storage medium may further be a component of the processor. The processor and the storage medium may be located in an application-specific integrated circuit (Application Specific Integrated Circuits, ASIC for short). Certainly, the processor and the storage medium may alternatively exist in an electronic device or a controlling device as discrete components.

**Claims**

1. A Polar code decoding method, comprising:

    obtaining, by a receiving apparatus, to-be-decoded information and scrambled frozen bits;
    performing, by the receiving apparatus, polarization decoding on some pieces of information in the to-be-decoded information based on the scrambled frozen bits, to obtain intermediate decoding information, wherein the intermediate decoding information comprises I information bit segments and cyclic redundancy check CRC bit segments respectively corresponding to the I information bit segments, and each of the CRC bit segments is concatenated at a tail of the information bit segment corresponding to the CRC bit segment, wherein I is a positive integer; and the to-be-decoded information comprises J information bit segments and CRC bit segments respectively corresponding to the J information bit segments, wherein J is a positive integer, and I is less than J;
    performing, by the receiving apparatus, CRC check on the intermediate decoding information; and
    if the CRC check performed by the receiving apparatus on the intermediate decoding information fails, stopping performing polarization decoding on the to-be-decoded information.

2. The method according to claim 1, wherein the scrambled frozen bits are scrambled by using a radio network temporary identifier RNTI of a terminal device.

3. The method according to claim 1, wherein the to-be-decoded information is candidate information determined through blind detection, and the method further comprises:

    performing, by the receiving apparatus, the foregoing polarization decoding and CRC check steps on N pieces of candidate information on which polarization decoding is not performed and that are determined through blind detection, until a quantity of first candidate information is equal to N, or until a quantity of the first candidate information is equal to a preset maximum quantity of decoding attempts, or until second candidate information is obtained; and outputting all information bit segments obtained after polarization decoding is completed on the second candidate information, wherein N is a positive integer;
    the first candidate information is candidate information on which the CRC check fails; and the second candidate information is candidate information on which polarization decoding is completed on all information in the candidate information and on which the CRC check succeeds.

4. The method according to claim 3, wherein the candidate information determined through blind detection is used to determine a physical downlink control channel PDCCH or a physical broadcast channel PBCH.

5. The method according to any one of claims 1 to 4, further comprising:

    if the CRC check performed by the receiving apparatus on the intermediate decoding information succeeds, returning to a step of continuing to perform polarization decoding, to obtain updated intermediate decoding information; performing CRC check on the updated intermediate decoding information, until the CRC check fails, then stopping performing polarization decoding, or until the CRC check succeeds, then completing polarization decoding on all information in the to-be-decoded information; and outputting all information bit segments obtained after polarization decoding is completed on the to-be-decoded information, wherein
    the updated intermediate decoding information comprises I+1 information bit segments and CRC bit segments respectively corresponding to the I+1 information bit segments, and each of the CRC bit segments is concatenated at the tail of the information bit segment corresponding to the CRC bit segment.

**6.** The method according to claim 5, wherein that CRC check performed on the intermediate decoding information succeeds comprises:

that CRC check performed on each of the I information bit segments succeeds.

**7.** The method according to claim 6, wherein that the CRC check performed on the information bit segment succeeds comprises:

obtaining L decoding paths by using a successive cancellation list SCL algorithm, wherein L is a positive integer; and

if CRC check performed on any one of the L decoding paths succeeds, determining that the CRC check performed on the information bit segment succeeds.

**8.** The method according to any one of claims 1 to 7, wherein the performing, by the receiving apparatus, CRC check on the intermediate decoding information comprises:

separately performing, by the receiving apparatus, CRC check on the I information bit segments in sequence based on an arrangement order of the I information bit segments.

**9.** The method according to any one of claims 1 to 7, wherein that the CRC check performed on the intermediate decoding information fails comprises:

that CRC check performed on any one of the I information bit segments fails.

**10.** The method according to claim 9, wherein that the CRC check performed on the information bit segment fails comprises:

obtaining L decoding paths by using the successive cancellation list SCL algorithm, wherein L is a positive integer; and

if CRC check performed on each of the L decoding paths fails, determining that the CRC check performed on the information bit segment fails.

**11.** A Polar code encoding method, comprising:

obtaining, by a sending apparatus, a to-be-encoded information bit sequence;

segmenting, by the sending apparatus, the to-be-encoded information bit sequence, to obtain J information bit segments, wherein J is an integer greater than 1;

separately performing, by the sending apparatus, cyclic redundancy check CRC check on the J information bit segments, to obtain J CRC bit segments;

performing, by the sending apparatus, polarization encoding on J CRC-checked information bit segments and preset frozen bits, to obtain a polarization-encoded information bit sequence, wherein the J CRC-checked information bit segments comprise the J information bit segments and the J CRC bit segments, and each of the CRC bit segments is concatenated at a tail of the information bit segment corresponding to the CRC bit segment; and

outputting, by the sending apparatus, the polarization-encoded information bit sequence.

**12.** The method according to claim 11, wherein the preset frozen bits are scrambled by using a radio network temporary identifier RNTI of a terminal device.

**13.** The method according to claim 12, wherein that the preset frozen bits are scrambled by using an RNTI of a terminal device comprises:

cyclically scrambling, by the sending apparatus, the RNTI of the terminal device on the frozen bits.

**14.** The method according to claim 12, wherein that the preset frozen bits are scrambled by using an RNTI of a terminal device comprises:

scrambling, by the sending apparatus, the RNTI of the terminal device on frozen bits corresponding to at least one of the J information bit segments.

**15.** The method according to claim 12, wherein that the preset frozen bits are scrambled by using an RNTI of a terminal device comprises:
that frozen bits corresponding to each of the J information bit segments comprise at least one frozen bit scrambled by using the RNTI of the terminal device.

16. The method according to any one of claims 11 to 15, wherein the to-be-encoded information bit sequence is information carried in downlink control information DCI or a physical broadcast channel PBCH.

17. The method according to any one of claims 11 to 15, wherein the J information bit segments each comprise an equal quantity of information bits.

18. A receiving apparatus, comprising:

an obtaining module, configured to obtain to-be-decoded information and scrambled frozen bits;
a decoding module, configured to perform polarization decoding on some pieces of information in the to-be-decoded information based on the scrambled frozen bits, to obtain intermediate decoding information, wherein the intermediate decoding information comprises I information bit segments and cyclic redundancy check CRC bit segments respectively corresponding to the I information bit segments, and each of the CRC bit segments is concatenated at a tail of the information bit segment corresponding to the CRC bit segment, wherein I is a positive integer; and the to-be-decoded information comprises J information bit segments and CRC bit segments respectively corresponding to the J information bit segments, wherein J is a positive integer, and I is less than J;
a check module, configured to perform CRC check on the intermediate decoding information; and
the decoding module, further configured to: if the CRC check performed on the intermediate decoding information fails, stop performing polarization decoding on the to-be-decoded information.

19. The receiving device according to claim 18, wherein the scrambled frozen bits are scrambled by using a radio network temporary identifier RNTI of a terminal device.

20. The receiving apparatus according to claim 18, wherein the to-be-decoded information is candidate information determined through blind detection;
the decoding module is further configured to perform the foregoing polarization decoding step on N pieces of candidate information on which polarization decoding is not performed and that are determined through blind detection, and the check module is further configured to: perform the foregoing CRC check step, until a quantity of first candidate information is equal to N, or until a quantity of the first candidate information is equal to a preset maximum quantity of decoding attempts, or until second candidate information is obtained; and output all information bit segments obtained after polarization decoding is completed on the second candidate information, wherein N is a positive integer; the first candidate information is candidate information on which the CRC check fails; and the second candidate information is candidate information on which polarization decoding is completed on all information in the candidate information and on which the CRC check succeeds.

21. The receiving device according to claim 20, wherein the candidate information determined through blind detection is used to determine a physical downlink control channel PDCCH or a physical broadcast channel PBCH.

22. The receiving apparatus according to any one of claims 18 to 21, wherein
the decoding module is further configured to: if the CRC check performed on the intermediate decoding information succeeds, return to a step of continuing to perform polarization decoding, to obtain updated intermediate decoding information; and
the check module is further configured to: perform CRC check on the updated intermediate decoding information, until the CRC check fails, then stop performing polarization decoding, or until the CRC check succeeds, then complete polarization decoding on all information in the to-be-decoded information; and output all information bit segments obtained after polarization decoding is completed on the to-be-decoded information, wherein
the updated intermediate decoding information comprises I+1 information bit segments and CRC bit segments respectively corresponding to the I+1 information bit segments, and each of the CRC bit segments is concatenated at the tail of the information bit segment corresponding to the CRC bit segment.

23. The receiving apparatus according to claim 22, wherein the check module is specifically configured to:
determine that CRC check performed on each of the I information bit segments succeeds.

24. The receiving apparatus according to claim 23, wherein the check module is specifically configured to:

obtain L decoding paths by using a successive cancellation list SCL algorithm, wherein L is a positive integer; and if CRC check performed on any one of the L decoding paths succeeds, determine that the CRC check performed on the information bit segment succeeds.

25. The receiving apparatus according to any one of claims 18 to 24, wherein the check module is specifically configured to:
separately perform, by the receiving apparatus, CRC check on the I information bit segments in sequence based on an arrangement order of the I information bit segments.

26. The receiving apparatus according to any one of claims 18 to 24, wherein the check module is specifically configured to:
determine that CRC check performed on any one of the I information bit segments fails.

27. The receiving apparatus according to claim 26, wherein the check module is specifically configured to:

obtain L decoding paths by using the successive cancellation list SCL algorithm, wherein L is a positive integer; and
if CRC check performed on each of the L decoding paths fails, determine that the CRC check performed on the information bit segment fails.

28. A sending apparatus, comprising:

an obtaining module, configured to obtain a to-be-encoded information bit sequence;
a data segmentation module, configured to segment the to-be-encoded information bit sequence, to obtain J information bit segments, wherein J is an integer greater than 1;
a check module, configured to separately perform cyclic redundancy check CRC check on the J information bit segments, to obtain J CRC bit segments; and
an encoding module, configured to: perform polarization encoding on J CRC-checked information bit segments and preset frozen bits, to obtain a polarization-encoded information bit sequence; and output the polarization-encoded information bit sequence, wherein the J CRC-checked information bit segments comprise the J information bit segments and the J CRC bit segments, and each of the CRC bit segments is concatenated at a tail of the information bit segment corresponding to the CRC bit segment.

29. The sending apparatus according to claim 28, wherein the preset frozen bits are scrambled by using a radio network temporary identifier RNTI of a terminal device.

30. The sending apparatus according to claim 29, wherein the encoding module is specifically configured to:
cyclically scramble the RNTI of the terminal device on the frozen bits.

31. The sending apparatus according to claim 29, wherein the encoding module is specifically configured to:
scramble the RNTI of the terminal device on frozen bits corresponding to at least one of the J information bit segments.

32. The sending apparatus according to claim 29, wherein the encoding module is specifically configured to:
indicate that frozen bits corresponding to each of the J information bit segments comprise at least one frozen bit scrambled by using the RNTI of the terminal device.

33. The sending apparatus according to any one of claims 28 to 32, wherein the to-be-encoded information bit sequence is information carried in downlink control information DCI or a physical broadcast channel PBCH.

34. The sending apparatus according to any one of claims 28 to 32, wherein the J information bit segments each comprise an equal quantity of information bits.

FIG. 1

| DCI | CRC bit (16 bits) |
|-----|-------------------|

$\oplus$

| RNTI |
|------|

| DCI | Scrambled CRC bit (16 bits) |
|-----|------------------------------|

FIG. 2

Obtain a to-be-encoded information bit sequence — S101

Segment the to-be-encoded information bit sequence, to obtain J information bit segments — S102

Perform CRC check on the J information bit segments, to obtain J CRC bit segments — S103

Perform polarization encoding on J CRC-checked information bit segments and preset frozen bits, to obtain a polarization-encoded information bit sequence — S104

Output the polarization-encoded information bit sequence — S105

FIG. 3

FIG. 4

Obtain to-be-decoded information and scrambled frozen bits — S201

Perform polarization decoding on some pieces of information in the to-be-decoded information based on the scrambled frozen bits, to obtain intermediate decoding information — S202

Perform CRC check on the intermediate decoding information — S203

If the CRC check performed on the intermediate decoding information fails, stop performing polarization decoding on the to-be-decoded information — S204

FIG. 5

FIG. 6

FIG. 7

FIG. 8

FIG. 9

```
┌─────────────────────────────────────────────┐
│   ┌─────────────────────────────┐            │
│   │     Obtaining module        │      21    │
│   └─────────────────────────────┘            │
│                                              │
│   ┌─────────────────────────────┐            │
│   │   Data segmentation module  │      22    │
│   └─────────────────────────────┘            │
│                                              │
│   ┌─────────────────────────────┐            │
│   │       Check module          │      23    │
│   └─────────────────────────────┘            │
│                                              │
│   ┌─────────────────────────────┐            │
│   │      Encoding module        │      24    │
│   └─────────────────────────────┘            │
│                                              │
│                        Sending apparatus     │
└─────────────────────────────────────────────┘
```

FIG. 10

```
┌─────────────────────────────────────────────┐
│   ┌─────────────────────────────┐            │
│   │     Obtaining module        │      31    │
│   └─────────────────────────────┘            │
│                                              │
│   ┌─────────────────────────────┐            │
│   │      Decoding module        │      32    │
│   └─────────────────────────────┘            │
│                                              │
│   ┌─────────────────────────────┐            │
│   │       Check module          │      33    │
│   └─────────────────────────────┘            │
│                                              │
│                      Receiving apparatus     │
└─────────────────────────────────────────────┘
```

FIG. 11

FIG. 12

FIG. 13

## INTERNATIONAL SEARCH REPORT

| International application No. |
| --- |
| **PCT/CN2019/083008** |

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; WPI; EPODOC; CNKI; 3GPP; IEEE: 分段, CRC, 编码, 循环冗余校验, 极化, cyclic, redundancy, check, RNTI, polar, code, SCL, divide

**C. DOCUMENTS CONSIDERED TO BE RELEVANT**

| Category* | Citation of document, with indication, where appropriate, of the relevant passages | Relevant to claim No. |
| --- | --- | --- |
| X | CN 107517095 A (BEIJING INSTITUTE OF TECHNOLOGY) 26 December 2017 (2017-12-26) description, paragraphs [0004]-[0105] | 1-34 |
| X | CN 105337696 A (SOUTHEAST UNIVERSITY) 17 February 2016 (2016-02-17) description, paragraphs [0019]-[0038] | 1-34 |
| A | CN 105227189 A (UNIVERSITY OF ELECTRONIC SCIENCE AND TECHNOLOGY OF CHINA) 06 January 2016 (2016-01-06) entire document | 1-34 |
| A | WO 2017194013 A1 (ZTE CORPORATION) 16 November 2017 (2017-11-16) entire document | 1–34 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 July 2019** | **24 July 2019** |

| Name and mailing address of the ISA/CN | Authorized officer |
| --- | --- |
| **State Intellectual Property Office of the P. R. China (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/083008**

| Patent document cited in search report | | | Publication date (day/month/year) | Patent family member(s) | | | Publication date (day/month/year) |
|---|---|---|---|---|---|---|---|
| CN | 107517095 | A | 26 December 2017 | None | | | |
| CN | 105337696 | A | 17 February 2016 | None | | | |
| CN | 105227189 | A | 06 January 2016 | None | | | |
| WO | 2017194013 | A1 | 16 November 2017 | CN | 107370488 | A | 21 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810356380

**Non-patent literature cited in the description**

- *R1-1611254 in 3GPP TSG RAN WG1 Meeting #87*